# EUROPÄISCHE PATENTSCHRIFT

(11) **EP 2 742 261 B1**
(45) Veröffentlichungstag und Bekanntmachung des Hinweises auf die Patenterteilung: **16.05.2018**
(21) Anmeldenummer: 12731475.5
(22) Anmeldetag: 05.07.2012
(51) Int. Cl.: F16H 61/70, F16H 61/04

(54) **VERFAHREN ZUR SCHALTSTEUERUNG EINES AUTOMATISIERTEN GRUPPENGETRIEBES**
METHOD FOR SHIFT CONTROL OF AN AUTOMATED GROUP GEAR
PROCÉDÉ POUR LA COMMANDE DE LA COMMUTATION D'UNE BOÎTE DE VITESSES GROUPÉE AUTOMATISÉE

(30) Priorität: 11.08.2011 DE 102011080849
(43) Veröffentlichungstag der Anmeldung: 18.06.2014
(73) Patentinhaber: ZF Friedrichshafen AG, 88046 Friedrichshafen (DE)
(72) Erfinder: STEINBORN, Mario, 88046 Friedrichshafen (DE); MAIR, Roland, 88069 Tettnang (DE); SCHNEIDER, Florian, 88161 Lindenberg (DE); BREUER, Jochen, 88069 Tettnang (DE)
(86) Internationale Anmeldenummer: PCT/EP2012/063124
(87) Internationale Veröffentlichungsnummer: WO 2013/020761

(56) Entgegenhaltungen:
- EP-A1- 0 565 257
- EP-A1- 0 683 336
- EP-A2- 0 471 491
- EP-B1- 1 565 674
- WO-A1-2008/107318

## Beschreibung

Die Erfindung betrifft ein Verfahren zur Schaltsteuerung eines automatisierten Gruppengetriebes gemäß dem Oberbegriff des Patentanspruchs 1, wie in dem Dokument EP-A1-0683336 offenbart. Automatisierte Gruppengetriebe sind seit längerem bekannt. Sie kommen bevorzugt in solchen Nutzfahrzeugen zum Einsatz, die eine hohe Anzahl von Gängen und eine große Gesamtspreizung benötigen. Je nach angestrebter Gangzahl umfassen sie meist ein mehrgängiges Hauptgetriebe in Vorgelegebauweise sowie eine diesem im Kraftfluss nachgeordnete zweistufige Bereichsgruppe in Planetenbauweise und/oder eine im Kraftfluss vorgeordnete Splitgruppe in Vorgelegebauweise. Die Gruppenbauweise ermöglicht gegenüber einem Einzelgetriebe mit einer vergleichbaren Anzahl von Gängen deutlich kompaktere Abmessungen und ein geringeres Gewicht. Da, je nach Gangwechsel, sowohl einfache Umschaltungen in einer Getriebegruppe als auch relativ komplizierte Kombinationen von Übersetzungsstufenwechseln in mehreren Teilgetrieben vorkommen, erfolgt die Schaltung bevorzugt vollautomatisch oder teilautomatisch. Als automatisierte Schaltgetriebe bieten solche Gruppengetriebe gegenüber manuellen Schaltgetrieben einen höheren Bedienungskomfort und vermeiden Bedienungsfehler.

Bei einem üblichen Schaltablauf mit einem Übersetzungswechsel in zwei Teilgetrieben erfolgen die Schaltphasen in den Teilgetrieben sequenziell, wobei nach dem Lastabbau am Antriebsmotor das Hauptgetriebe nach Neutral geschaltet wird, anschließend ein anderes Teilgetriebe zum Umschalten freigegeben wird, und nachdem das andere Teilgetriebe umgeschaltet ist, der Hauptgetriebegang eingelegt und dadurch mittels der Synchronisierungen synchronisiert wird.

Allerdings führen die Trägheiten der zu synchronisierenden drehenden Massen des Getriebes beim Gangwechsel zu relativ langen Schaltzeiträumen. Lange Schaltzeiträume treten insbesondere bei einer Bereichsschaltung auf, wobei zunächst eine Bereichsgruppe zwischen einem unteren und einem oberen Gangbereich umgeschaltet werden muss, und anschließend noch die Synchronisierung mit einem Gangwechsel des Hauptgetriebes durchzuführen ist. Das Umschalten der Bereichsgruppe kann dabei einen relativ großen Zeitraum einnehmen. Bereichsschaltungen werden daher vom Fahrer häufig als störend empfunden und können zudem die Dynamik des Fahrbetriebs beeinträchtigen.

Aus der WO 2008/107 318 A1 ist ein Gruppengetriebe mit einem Hauptgetriebe, einer Splitgruppe und einem Bereichsgetriebe bekannt, bei dem das Hauptgetriebe und die nachgeordnete Bereichsgruppe unsynchronisiert sowie die vorgeschaltete Splitgruppe synchronisiert ausgebildet sind. Die Synchronschalteinrichtung der Splitgruppe ist über eine Trennkupplung mit einem Antriebsmotor verbindbar und trennbar. Bei der Synchronschalteinrichtung der Splitgruppe kann auf eine Neutralstellung verzichtet werden. Die Bereichsgruppe ist mit einem einfachen Planetenradsatz ausgebildet, der zwischen einer Langsamfahrstufe, entsprechend einer Planetenübersetzung, und einer Schnellfahrstufe, entsprechend einer Direktkopplung zwischen Hauptgetriebe und Abtrieb, sowie einer Neutralstellung umschaltbar ist.

Ein Schaltablaufplan für dieses Getriebe sieht vor, dass bei einer Bereichsschaltung in dem Hauptgetriebe und in der Bereichsgruppe jeweils ein Wechsel zwischen zwei Übersetzungsstufen erfolgt, wobei die Schaltrichtungen in der Bereichsgruppe und dem Hauptgetriebe entgegengesetzt sein können. Bei der Schaltung wird nach einem Öffnen der Trennkupplung und dem Lastabbau am Antriebsmotor die Bereichsgruppe nach Neutral geschaltet, damit das gesamte Gruppengetriebe bei dem Gangwechsel zumindest zeitweise sowohl vom Antriebsmotor als auch vom abtriebsseitigen Antriebsstrang, also den Fahrzeugrädern, getrennt und somit vollständig lastfrei ist. Anschließend werden die rotierenden freien Massen des Hauptgetriebes und der Splitgruppe mittels einer Getriebebremse auf eine zum Ausrücken zulässige schaltbare niedrige Drehzahl abgebremst. Gleichzeitig beginnt die Anpassung der Motordrehzahl an die Synchrondrehzahl des angesteuerten Zielganges. Der Wechsel der Übersetzungsstufe im Hauptgetriebe und der Wechsel der Übersetzungsstufe in der Splitgruppe erfolgen dann zeitlich parallel. Anschließend wird durch ein zumindest teilweises Schließen der Trennkupplung die Drehzahl der freien Massen auf die parallel in Richtung Synchrondrehzahl des Zielgangs laufende Motordrehzahl beschleunigt und in der Folge die klauengeschaltete Bereichsgruppe über eine Getriebehauptwelle synchronisiert. Danach wird die neue Übersetzungsstufe der Bereichsgruppe eingeschaltet, wodurch bei einem vollständigen Schließen der Trennkupplung der Lastaufbau des Antriebsmotors beginnt und der Gangwechsel damit abgeschlossen wird.

Aus der EP 1 565 674 B1 ist ein Gruppengetriebe mit einem Hauptgetriebe, einer Splitgruppe und einer Bereichsgruppe bekannt, bei dem das Hauptgetriebe mittels einer Handschaltvorrichtung manuell geschaltet wird, und die Übersetzung der Splitgruppe und der Bereichsgruppe über die Handschaltvorrichtung vorgewählt werden. Bei einer Bereichsschaltung beginnt mit dem Erkennen der Neutralposition im Hauptgetriebe die Umschaltung der Bereichsgruppe. Während der Umschaltung der Bereichsgruppe wird die Zielübersetzung im Hauptgetriebe angewählt, worauf eine Servounterstützung zum Schalten der Übersetzungsstufe im Hauptgetriebe verzögert wird, und vorzugsweise erst nach der Umschaltung der Bereichsgruppe freigegeben wird, um laute Schaltgeräusche und den Verschleiß von Schaltungsteilen zu verringern.

Vor diesem Hintergrund liegt der Erfindung die Aufgabe zugrunde, ein Verfahren zur Schaltsteuerung eines automatisierten Gruppengetriebes mit synchronisierten Teilgetrieben anzugeben, das kurze Schaltzeiten ermöglicht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem automatisierten Gruppengetriebe mit antriebstechnisch hintereinander angeordneten synchronisierten Teilgetrieben, diese Teilgetriebe bei der Nutzung von getriebeinternen Synchronisierungen und von externen Synchronisierungsmitteln zeitlich parallel synchronisiert sowie ihre Übersetzungsstufen in sich überschneidenden Schaltvorgängen umgeschaltet werden können, wodurch signifikant verkürzte Schaltzeiten erreichbar sind.

Demnach geht die Erfindung aus von einem Verfahren zur Schaltsteuerung eines automatisierten Gruppengetriebes, wobei das Gruppengetriebe mindestens ein mehrstufiges Hauptgetriebe sowie eine dem Hauptgetriebe antriebstechnisch nachgeordnete und mit diesem über eine Hauptwelle antriebsverbundene zumindest zweistufige Bereichsgruppe aufweist, bei dem eine Eingangswelle des Hauptgetriebes mit einer Antriebsvorrichtung antriebsverbindbar oder antriebsverbunden ist, bei dem das Hauptgetriebe und die Bereichsgruppe Synchronisierungsvorrichtungen mit Schaltkupplungen aufweisen, wobei die Synchronisierungsvorrichtungen für das Hauptgetriebe jeweils zwei Schaltstellungen für die betreffenden Übersetzungsstufen und eine Schaltstellung für eine Neutralstellung aufweisen, wobei die mindestens eine Synchronisierungsvorrichtung der Bereichsgruppe ausschließlich zwei Schaltstellungen für die betreffenden Übersetzungsstufen aufweist, und bei dem während einer Bereichsschaltung in dem Hauptgetriebe sowie in der Bereichsgruppe jeweils ein Wechsel zwischen zwei Übersetzungsstufen erfolgt.

Zur Lösung der gestellten Aufgabe sieht die Erfindung vor, dass bei der Bereichsschaltung während des Synchronisierens der Bereichsgruppe die Eingangswelle des zuvor in Neutral geschalteten Hauptgetriebes mittels einer Ansteuerung externer, auf die Eingangswelle wirkenden Synchronisierungshilfen auf eine Zieldrehzahl synchronisiert wird, und dass nach dem Erreichen der Zieldrehzahl wahlweise entweder nach dem Synchronisieren und Umschalten der Übersetzungsstufe der Bereichsgruppe oder unabhängig vom momentanen Synchronisierungszustand der Bereichsgruppe die neue Übersetzungsstufe in dem Hauptgetriebe eingelegt wird.

Unter einer Zieldrehzahl wird diejenige Drehzahl bei einer Bereichsschaltung verstanden, die sich bei der aktuellen Abtriebsdrehzahl am Ausgang des Getriebes im neu einzulegenden Gang am Eingang des Getriebes einstellt.

Das Verfahren ermöglicht parallele Schaltabläufe bei Gruppengetrieben, bei denen mindestens zwei antriebstechnisch hintereinander angeordnete Getriebegruppen mit Synchronisierungsvorrichtungen ausgebildet sind. Dadurch sind erheblich kürzere Gesamtschaltzeiten im Vergleich zu herkömmlich, sequenziell schaltenden Gruppengetrieben erreichbar. Grundsätzlich dürfen antriebstechnisch hintereinander angeordnete Getriebegruppen während der Schaltung ihre internen Synchronschaltmittel nicht gleichzeitig verwenden, wenn diese gegeneinander arbeiten würden. Eine parallele Synchronisierung von Getriebegruppen wird bei der Erfindung jedoch dadurch realisiert, dass die motornahe vordere Gruppe, also das Hauptgetriebe, über eine externe Synchronisierungshilfe, beispielsweise einen Verbrennungsmotor und eine Anfahr- bzw. Trennkupplung, synchronisiert wird, während die hintere Gruppe, also die Bereichsgruppe, mit der eigenen Synchronisierungsvorrichtung synchronisiert wird.

Insbesondere kann bereits während des Synchronisationsvorgangs der Bereichsgruppe die Synchrondrehzahl des Hauptgetriebes mittels des Antriebsmotors und der Anfahr- bzw. Trennkupplung eingestellt werden, und die neue Übersetzungsstufe in dem Hauptgetriebe kann bereits vor dem Abschluss des Synchronisationsvorgangs der Bereichsgruppe eingelegt werden. Dafür ist es nicht erforderlich, den gesamten Antriebsstrang während der Schaltung vom Antrieb bzw. Abtrieb vollständig zu trennen. Daher kommt die abtriebsseitige Bereichsgruppe mit einer Umschaltvorrichtung ohne Neutralstellung aus, was sich in den Herstellungskosten günstig auswirkt.

Als externe Synchronisierungshilfen können ein Verbrennungsmotor und/oder eine zwischen dem Verbrennungsmotor und der Eingangswelle des Hauptgetriebes angeordnete steuerbare Trennkupplung und/oder eine mit dem Hauptgetriebe antriebsverbundene Elektromaschine und/oder eine regelbare Getriebebremse und/oder eine regelbare Hydraulikmittelpumpe und/oder ein steuerbares Aggregat eines Nebenabtriebs vorgesehen sein. Grundsätzlich kommen als externe Synchronisierungshilfen alle Elemente in Betracht, die geeignet sind, ein positives oder negatives Drehmoment im Antriebsstrang aufzubringen.

Die Erfindung ist somit insbesondere auch bei einem Fahrzeug mit einem Parallelhybridantrieb einfach nutzbar, bei dem das Einstellen der Zieldrehzahl an der Eingangswelle wahlweise mittels einer als Antriebsvorrichtung zur Verfügung stehenden Elektromaschine erfolgen kann.

Bei der Anwendung der externen Synchronisierungshilfe ist zu beachten, dass die üblicherweise als Sperrsynchronisierungen ausgebildeten internen Synchronisierungsvorrichtungen, die über eine Reibkupplung die Drehzahl der Schaltpartner angleichen und durch ein Sperrelement erst nach Abschluss der Synchronisierung das formschlüssige Einlegen des Ganges zulassen, nicht ungewollt belastet oder entsperrt werden. Die Drehmomentgradienten der externen Synchronisierungshilfen werden daher bei der Durchführung des Verfahrens sinnvollerweise unterhalb der Drehmomentgradienten der internen Synchronisierungen eingestellt bzw. auf einen solchen Grenzwert begrenzt. Vorzugsweise wird zur Erhöhung der Schaltsicherheit und zur Reduzierung der Belastung der Schaltelemente beim Einschalten des Ganges das Synchronisierungsmoment der externen Synchronisierungshilfe reduziert.

Grundsätzlich können solche externen Synchronisierungshilfen auch zur Unterstützung der internen Synchronisierung in den Teilgetrieben vorteilhaft eingesetzt werden, insbesondere dann, wenn die Teilgetriebe innerhalb eines bestimmten Zeitraumes gleichzeitig oder überschneidend eingeschaltet werden.

Weiterhin kann vorgesehen sein, dass bei dem Einlegen der Übersetzung des Hauptgetriebes und/oder bei dem Einlegen der Übersetzung der Bereichsgruppe eine zuvor geschlossene oder teilgeschlossene Trennkupplung vorübergehend erneut geöffnet oder teilgeöffnet wird. Demnach kann die Trennkupplung zwischen Motoranschluss und Getriebeeingang beim Einschaltvorgang der Teilgetriebe vollständig geschlossen oder teilgeschlossen gehalten werden, oder es kann die beim Erreichen der Zieldrehzahl am Antriebsmotor zuvor geschlossene oder teilgeschlossene Trennkupplung wieder geöffnet bzw. teilgeöffnet werden.

Da sich die einzustellende Zieldrehzahl, also die Eingangsdrehzahl im neu einzulegenden Gang, aus dem Produkt von Abtriebsdrehzahl und Übersetzung des Zielgangs ergibt, kann die eingestellte Zieldrehzahl am Antriebsmotor bei einer ungenauen Kenntnis der Abtriebsdrehzahl von der korrekten Zieldrehzahl abweichen. Eine resultierende Fehldrehzahl wird in der Folge durch die interne Synchronisierung der Getriebegruppen kompensiert, wobei die Synchronisierung Arbeit verrichtet und damit kinetische Energie verbraucht. Diese Arbeit kann minimiert werden, indem die interne Synchronisierung zur Überwindung einer möglichen Fehldrehzahl nur die Massenträgheiten der betreffenden Getriebeteile zu synchronisieren hat, nicht jedoch ein über die Trennkupplung übertragenes Drehmoment. Dazu kann die Trennkupplung beim Einschaltvorgang der Teilgetriebe vorübergehend wieder geöffnet bzw. teilgeöffnet werden. Zudem können dadurch mögliche Einschaltstöße vermieden oder zumindest vermindert werden.

Die Erfindung stellt alternative Möglichkeiten zur Verfügung, um bei einer Bereichsumschaltung einen Zielgang zu synchronisieren. Somit kann bei dem Verfahren eine Entscheidung darüber getroffen werden, welche Alternative jeweils angewandt werden soll. Als Randbedingungen können dafür insbesondere der Verschleißzustand der getriebeinternen Synchronisierungen und/oder die Dynamik eines Antriebsmotors bei der Synchronisation im Vergleich zur Dynamik einer getriebeinternen Synchronisierung und/oder eine durch einen Drehzahlgradienten bedingte Geräuschentwicklung eines als Verbrennungsmotor ausgebildeten Antriebsmotors bei der Synchronisation herangezogen werden.

Bei einem Antriebsstrang, bei dem die Synchronisierung der Eingangswelle des Hauptgetriebes mittels einer Ansteuerung eines Verbrennungsmotors und einer Trennkupplung erfolgen kann und die Bereichsgruppe zweistufig ausgebildet ist, können bei einer Ausführungsform der Erfindung folgende Verfahrensschritte vorgesehen sein:
- Öffnen der Trennkupplung zum Verbrennungsmotor und Lastabbau am Verbrennungsmotor,
- Umschalten der Übersetzungsstufe der Bereichsgruppe und Beginn des Wechsels der Übersetzungsstufe des Hauptgetriebes, sowie Drehzahlführung des Verbrennungsmotors auf die Zieldrehzahl des Zielgangs der Bereichsschaltung an der Eingangswelle des Hauptgetriebes, mit
- Schalten des Hauptgetriebes nach Neutral,
- Warten des Hauptgetriebes auf das Erreichen der Zieldrehzahl durch den Verbrennungsmotor,
- Schließen oder Teilschließen der Trennkupplung nach Beendigung der Umschaltung der Bereichsgruppe,
- Einlegen der neuen Übersetzungsstufe im Hauptgetriebe,
- vollständiges Schließen der Trennkupplung zum Verbrennungsmotor und Lastaufbau am Verbrennungsmotor.

Demnach wird der Verbrennungsmotor auf die Zieldrehzahl des einzulegenden Ganges gebracht. Durch Schließen bzw. Teilschließen der Trennkupplung wird auch die Eingangswelle auf diese Zieldrehzahl eingestellt. Daraus resultierend ist das Hauptgetriebe synchronisiert und für das Einschalten der Hauptgetriebeübersetzung vorbereitet. Die Synchronisierung des Hauptgetriebes muss beim Einschalten des Hauptgetriebes somit keine Arbeit verrichten.

Abhängig von der Dauer des Synchronisierungsvorgangs der Bereichsgruppe und der Dynamik der externen Synchronisierungshilfen, insbesondere der Dynamik des Systems aus Verbrennungsmotor und Trennkupplung, kann der Hauptgetriebegang sofort nach dem Einschalten der Bereichsgruppe eingelegt werden, wenn der Verbrennungsmotor innerhalb der Schaltzeit der Bereichsgruppe die Zieldrehzahl bereits erreicht hat, oder nach einer kurzen Wartezeit bei bereits umgeschalteter Bereichsgruppe, sobald der Verbrennungsmotor die Zieldrehzahl erreicht hat. Die mögliche Wartezeit ist jedoch in jedem Fall kürzer im Vergleich zu einem herkömmlichen sequenziellen Schaltablauf in den Teilgetrieben. Dadurch kann eine signifikante Verkürzung der Gesamtschaltzeit erreicht und der Schaltkomfort erhöht werden.

Die obige Ausführungsform sieht demnach vor, in jedem Fall mit dem Einschalten des Hauptgetriebes zu warten, bis die Zielübersetzung der Bereichsgruppe eingelegt ist. Die interne Synchronisierung des Hauptgetriebes wird dadurch besonders geschont.

Bei einer dazu alternativen Ausführungsform der Erfindung kann folgender Ablauf vorgesehen sein:
- Öffnen der Trennkupplung zum Verbrennungsmotor und Lastabbau am Verbrennungsmotor,
- Wechsel der Übersetzungsstufe des Hauptgetriebes und Beginn des Umschaltens der Übersetzungsstufe der Bereichsgruppe, sowie Beginn einer Drehzahlführung des Verbrennungsmotors auf die Zieldrehzahl des Zielgangs der Bereichsschaltung an der Eingangswelle des Hauptgetriebes, mit
- Schalten des Hauptgetriebes nach Neutral,
- Warten des Hauptgetriebes auf das Erreichen der Zieldrehzahl durch den Verbrennungsmotor,
- Schließen oder Teilschließen der Trennkupplung,
- Einlegen der neuen Übersetzungsstufe im Hauptgetriebe,
- Unterstützen eines laufenden Synchronisierungsvorgangs der Bereichsgruppe durch die interne Synchronisierung des Hauptgetriebes,
- Einlegen der neuen Übersetzungsstufe der Bereichsgruppe,
- vollständiges Schließen der Trennkupplung zum Verbrennungsmotor und Lastaufbau am Verbrennungsmotor.

Demnach wird der Verbrennungsmotor auf die Zieldrehzahl des einzulegenden Ganges gebracht. Durch Schließen bzw. Teilschließen der Trennkupplung wird auch die Eingangswelle auf diese Zieldrehzahl gebracht. Daraus resultierend ist das Hauptgetriebe synchronisiert und die neue Hauptgetriebeübersetzung kann von Neutral aus ohne Verzögerung eingeschaltet werden.

Wird das Hauptgetriebe nun geschaltet, wenn der Synchronisierungsvorgang der Bereichsgruppe noch nicht abgeschlossen ist, dann arbeitet die interne Synchronisierung des Hauptgetriebes auf der einen Seite und die Synchronisierung der Bereichsgruppe auf der anderen Seite der Getriebehauptwelle, welche die beiden Teilgetriebe antriebsverbindet. Da jedoch beide Synchronisierungen die Hauptwelle des Getriebes in die gleiche Richtung synchronisieren und auf dieselbe Drehzahl hinarbeiten, wird der Synchronisierungsvorgang der Bereichsgruppe zeitlich verkürzt sowie die angewählte Bereichsgetriebeübersetzung kann früher eingelegt werden. Dadurch ergibt sich eine nochmals verkürzte Gesamtschaltzeit.

Das Verfahren kann bevorzugt bei einem automatisierten Gruppengetriebe eines Nutzfahrzeuges durchgeführt werden, das ein Hauptgetriebe in Vorgelegebauweise mit mehreren Übersetzungsstufen, beispielsweise fünf, aufweist, welches über eine als Reibungskupplung ausgebildete ansteuerbare Trennkupplung bzw. Anfahrkupplung mit einer als Verbrennungsmotor ausgebildeten Antriebsvorrichtung antriebsverbindbar ist, und dem eine Bereichsgruppe in Planetenbauweise antriebstechnisch nachgeordnet ist, die zwischen einer die Übersetzung des Hauptgetriebes modifizierenden Schaltstellung und einer die Übersetzung des Hauptgetriebes direkt übertragenden Schaltstellung umschaltbar ist.

Es ist jedoch keineswegs auf eine solche Getriebeanordnung oder Antriebsanordnung beschränkt, sondern auch bei anderen Antriebssträngen mit mindestens zwei automatisierten, synchronisierten Getriebegruppen, die hintereinander angeordnet sind, anwendbar. Beispielsweise ist die Erfindung auch für Fahrzeuge mit einem Hybridantrieb und einem derartigen Getriebe anwendbar, bei dem eine Elektromaschine fest mit einer Eingangswelle gekoppelt ist und das Einstellen der Eingangszieldrehzahl über die Elektromaschine erfolgen kann.

Zur Verdeutlichung der Erfindung ist der Beschreibung eine Zeichnung beigefügt. In dieser zeigt
- Fig. 1: ein Getriebeschema eines automatisierten Gruppengetriebes mit einem Hauptgetriebe und einer Bereichsgruppe,
- Fig. 2: ein Ablaufschema einer Bereichsschaltung bei einem Gruppengetriebe gemäß Fig.1,
- Fig. 3: ein alternatives Ablaufschema einer Bereichsschaltung bei einem Gruppengetriebe gemäß Fig.1, und
- Fig. 4: ein Gangdiagramm und ein Drehzahlverlauf eines Ablaufschemas einer Bereichsschaltung gemäß Fig. 3.

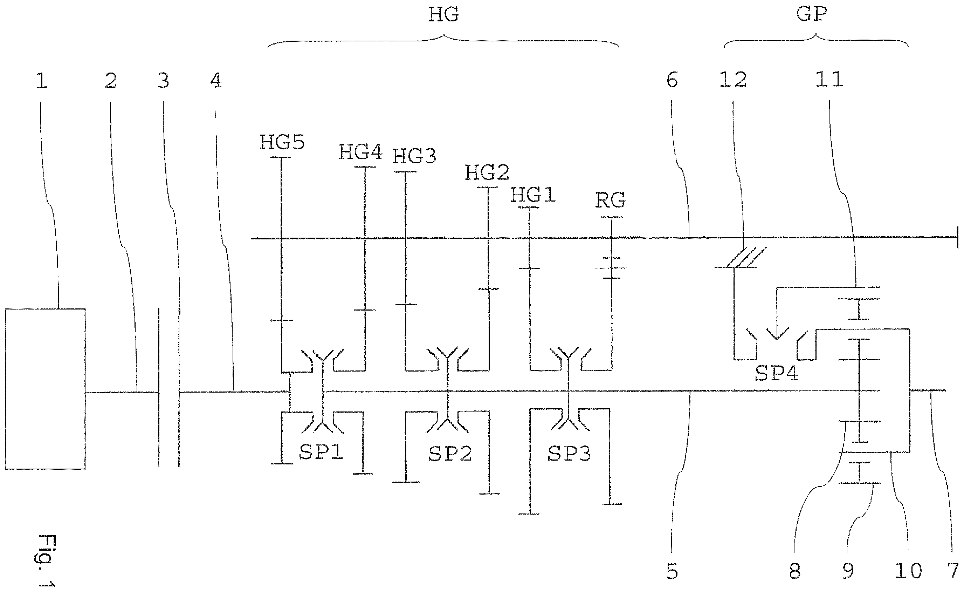

Demnach ist in Fig. 1 ein Getriebeschema eines automatisierten Gruppengetriebes, vorzugsweise für ein Nutzfahrzeug, dargestellt. Das Getriebe umfasst ein Hauptgetriebe HG mit fünf Radsätzen für Vorwärtsgänge HG1, HG2, HG3, HG4, HG5 und einen Radsatz für eine Rückwärtsgangstufe RG, sowie eine zweistufige Bereichsgruppe GP.

Das Hauptgetriebe HG ist als ein Vorgelegegetriebe ausgebildet, mit einer antriebsseitigen Eingangswelle 4, einer abtriebsseitigen Hauptwelle 5 und einer Vorgelegewelle 6. Die Übersetzungsstufen der Getriebegänge HG1, HG2, HG3, HG4, HG5, RG des Hauptgetriebes HG umfassen jeweils ein im Eingriff stehendes Zahnradpaar, und die Rückwärtsgangstufe RG weist erkennbar zusätzlich ein drehbar gelagertes Zwischenrad zur Drehrichtungsumkehr auf. Eine solche Anordnung ist an sich bekannt. Daher wird auf eine nähere Bezeichnung der Zahnräder verzichtet.

Die eingangsseitige Übersetzungsstufe des größten Hauptgetriebegangs HG5 ist als eine Eingangskonstante ausgebildet, mit einem Zahnradpaar, das ein mit der Vorgelegewelle 6 drehfest verbundenes Festrad und ein mit diesem kämmendes, mit der Eingangswelle 4 drehfest verbundenes Festrad aufweist. Die Eingangswelle 4 ist über eine Trenn- oder Anfahrkupplung 3 mit einer Antriebswelle 2 einer als Verbrennungsmotor ausgebildeten Antriebsvorrichtung 1 verbindbar. Die übrigen Übersetzungsstufen HG1, HG2, HG3, HG4, RG umfassen jeweils ein Festrad auf der Vorgelegewelle 6 und ein auf der Hauptwelle 5 drehbar gelagertes Losrad.

Die Losräder sind zur Schaltung von Gängen über als Synchronschaltpakete SP1, SP2, SP3 ausgebildete Synchronisierungsvorrichtungen mit der Hauptwelle 5 drehfest verbindbar, wobei diese Synchronschaltpakete SP1, SP2, SP3 zwei Schaltstellungen für zwei Gangstufen sowie eine Neutralstellung aufweisen. Darüber hinaus ist die Eingangswelle 4 mittels des eingangsseitigen Synchronschaltpakets SP1 zur Schaltung eines Direktganges direkt mit der Hauptwelle 5 drehfest verbindbar.

Die Bereichsgruppe GP ist als ein Planetengetriebe ausgebildet. Sie umfasst ein Sonnenrad 8, welches mit dem ausgangsseitigen Ende der in Richtung der nachgeschalteten Bereichsgruppe GP verlängerten Hauptwelle 5 drehfest verbunden ist, ein Hohlrad 11 sowie einen Planetenträger 10, der mehrere zwischen dem Sonnenrad 8 und dem Hohlrad 11 kämmende Planeten 9 führt und der ausgangsseitig mit einer Ausgangs- bzw. Abtriebswelle 7 drehfest verbunden ist.

Die Bereichsgruppe GP ist über ein weiteres Synchronschaltpaket SP4 zwischen zwei Schaltstellungen umschaltbar. In einer ersten Schaltstellung ist das Hohlrad 11 mit einem ortsfesten Bauteil 12 wie dem Getriebegehäuse verbunden, so dass die Übersetzung des Planetengetriebes auf die Abtriebswelle 7 wirksam ist. In einer zweiten Schaltstellung ist das Hohlrad 11 mit dem Planetenträger 10 gekoppelt, so dass das Planetengetriebe mit der Hauptwelle 5 im Block umläuft und die Abtriebswelle 7 mit der Hauptwelle 5 direkt gekoppelt ist. Eine Neutralstellung ist für das Synchronschaltpaket SP4 der Bereichsgruppe GP nicht vorgesehen. Insgesamt stellt das Gruppengetriebe somit ein 10-Gang-Getriebe dar.

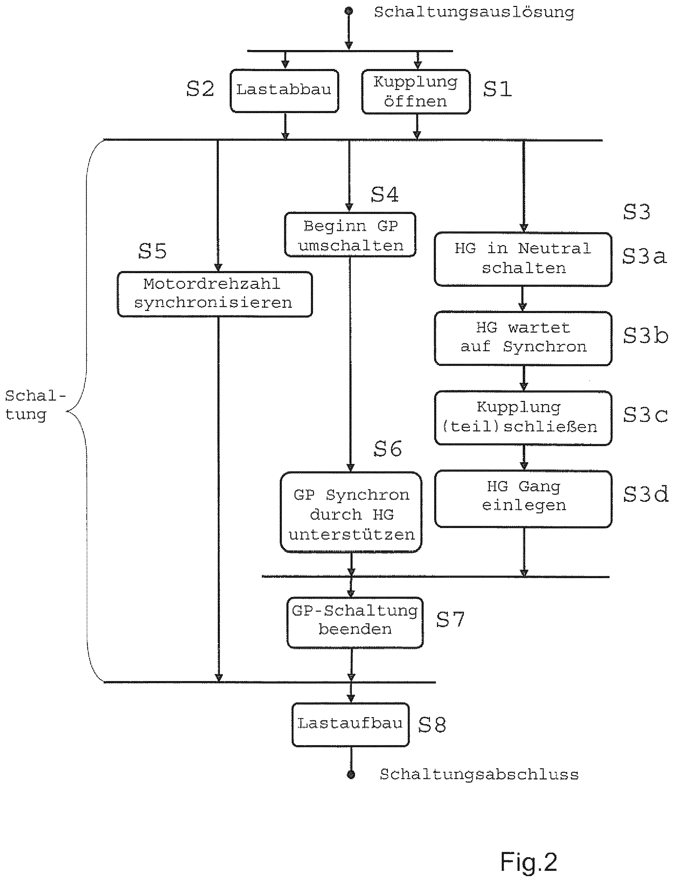

Die Fig. 2 zeigt einen beispielhaften Schaltablauf einer Bereichsschaltung für ein solches Gruppengetriebe. Bei der Schaltung erfolgen in beiden Teilgetrieben HG, GP Übersetzungswechsel.

Dies entspricht bei dem beispielhaften Getriebe gemäß Fig.1 einer Hochschaltung oder einer Rückschaltung zwischen einem fünften Gang G5 und einem sechsten Gang G6, wobei in gegenläufiger Schaltrichtung die Bereichsgruppe GP zwischen einem unteren und einem oberen Gangbereich GP1, GP2 umgeschaltet wird und das Hauptgetriebe HG zwischen dem ersten Gang HG1 und dem fünften Gang HG5 umgeschaltet wird. Für den in Fig. 2 gezeigten Ablauf wird im Folgenden ein Gangwechsel vom sechsten Gang G6 in den fünften Gang G5 angenommen.

Die Schaltung wird nach einer Anforderung eines Gangwechsels, der eine Bereichsschaltung bedingt, ausgelöst. Zu Beginn wird in einem Schritt S1 die Trennkupplung 3 geöffnet und parallel dazu in einem Schritt S2 die Last am Verbrennungsmotor 1 abgebaut.

Anschließend werden in einem Schritt S3 und in einem Schritt S4 gleichzeitig der Wechsel der Übersetzung des Hauptgetriebes HG und der Wechsel der Übersetzung der Bereichsgruppe GP eingeleitet. Dabei wird das Hauptgetriebe HG in einem Zwischenschritt S3a in Neutral geschaltet und verbleibt in einem Zwischenschritt S3b während einer Wartezeit in dieser Position, während die Drehzahl des Verbrennungsmotors 1 in einem Schritt S5 an die Zieldrehzahl des neuen Ganges herangeführt wird. Bei Erreichen der Zieldrehzahl wird in einem Zwischenschritt S3c die Trennkupplung 3 vorzugsweise teilgeschlossen und die neue Übersetzung im Hauptgetriebe HG in einem Zwischenschritt S3d sofort eingelegt.

Das Umschalten der Bereichsgruppe GP ist zu diesem Zeitpunkt noch nicht beendet, also das Synchronschaltpaket SP4 der Bereichsgruppe GP noch aktiv. Da die beiden Teilgetriebe HG, GP über die Hauptwelle 5 miteinander in Triebverbindung stehen, wird beim Einschalten des zuvor extern über die Drehzahlführung des Verbrennungsmotors 1 und das Schließen bzw. Teilschließen der Trennkupplung 3 synchronisierten Hauptgetriebes HG dessen internes Synchronschaltpaket SP1 aktiv. In der Folge synchronisieren das Synchronschaltpaket SP1 des Hauptgetriebes HG und das Synchronschaltpaket SP4 der Bereichsgruppe GP die Hauptwelle 5 auf dieselbe Drehzahl hin, wobei zuvor die sich aus der Abtriebsdrehzahl und der Übersetzung des Zielgangs G6 berechnete Zieldrehzahl an der Eingangswelle 4 eingestellt wurde. Die Synchronisation der Bereichsgruppe GP wird daher in einem Schritt S6 beschleunigt zu Ende geführt, so dass die Bereichsgruppe GP schneller als bisher möglich in einem Schritt S7 in den Zielbereich umgeschaltet werden kann. Abschließend erfolgt in einem Schritt S8 der Lastaufbau am Verbrennungsmotor 1, wobei die zuvor gegebenenfalls teilgeschlossene Trennkupplung 3 vollständig geschlossen wird, und damit der Gangwechsel abgeschlossen ist.

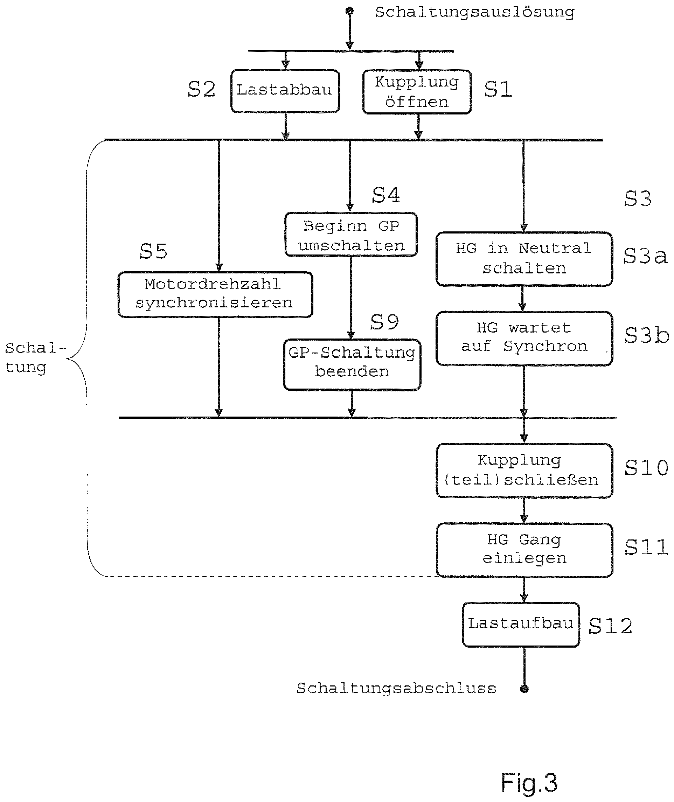

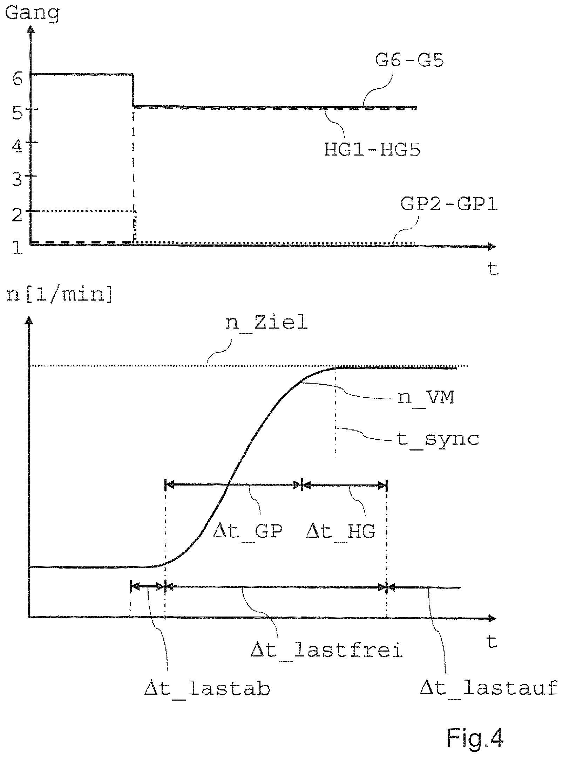

Die Fig. 3 zeigt einen dazu alternativen Schaltablauf einer Bereichsschaltung vom sechsten Gang G6 in den fünften Gang G5 für das Gruppengetriebe gemäß Fig. 1. Ein zugehöriges Gangdiagramm sowie ein Drehzahldiagramm sind in Fig. 4 dargestellt. Demnach wird das Hauptgetriebe HG von einem ersten Hauptgetriebegang HG1 in einen fünften Hauptgetriebegang HG5 geschaltet, wobei zunächst das Synchronpaket SP3 nach Neutral geschaltet und nach einer externen Synchronisierung der Eingangswelle 4 durch den Verbrennungsmotor 1 beim Einschalten des Hauptgetriebes HG das zugehörige Synchronpaket SP1 des fünften Gangs G5 in die betreffende Schaltstellung gestellt wird. Die Bereichsgruppe GP wird parallel dazu durch direktes Wechseln der Schaltstellung des zugehörigen Synchronpakets SP4 vom oberen Gangbereich GP2 in den unteren Gangbereich GP1 umgeschaltet.

Bei dem Schaltablauf gemäß Fig. 3 wird nach dem Öffnen der Kupplung 3 in Schritt S1 und dem Lastabbau in einem Zeitraum Δt_lastab in Schritt S2 wiederum die Umschaltung der Bereichsgruppe GP sowie die Schaltung im Hauptgetriebe HG gleichzeitig eingeleitet. Das Hauptgetriebe HG wird dazu in einem Zwischenschritt S3a nach Neutral geschaltet. Für das Umschalten der Bereichsgruppe GP wird ein Zeitraum Δt_GP angenommen, für den Übersetzungswechsel des Hauptgetriebes HG ein Zeitraum Δt_HG. Innerhalb der Gesamtumschaltzeit Δt_lastfrei ist der Triebstrang momentenfrei.

Während der Synchronisierung der Bereichsgruppe GP wird mittels des Verbrennungsmotors 1 und der Trennkupplung 3 die Synchrondrehzahl der Hauptgruppe HG eingestellt. Dazu wird die Drehzahl n_VM des Verbrennungsmotor 1 in einem Schritt S5 an die Zieldrehzahl n_Ziel herangeführt, die er zu einem Zeitpunkt t_synch erreicht. Dabei verbleibt das Hauptgetriebe HG in einem Zwischenschritt S3b in einer Warteposition.

Im Gegensatz zum Schaltablauf gemäß Fig. 2 wird der Hauptgetriebegang HG5 jedoch erst eingelegt, wenn in einem Schritt S9 der Umschaltvorgang der Bereichsgruppe GP in den unteren Gangbereich GP2-GP1 beendet ist. Nach diesem Bereichswechsel wird die Kupplung 3 in einem Schritt S10 geschlossen bzw. teilgeschlossen, wodurch sich an der Eingangswelle 4 die Zieldrehzahl einstellt. Der Hauptgetriebegang HG5 kann, da das Hauptgetriebe HG nun bereits durch die externe Synchronisierung mittels Verbrennungsmotor 1 und Kupplung 3 synchronisiert ist, in einem Schritt S11 sofort durchgeschaltet werden, d.h. das Synchronpaket SP1 in die entsprechende Schaltstellung gebracht werden. Die interne Synchronisierung hat somit wegen der bereits erfolgten externen Synchronisierung beim Einlegen des Ganges keine Arbeit zu verrichten. Abschließend folgt in einem Schritt S12 der Lastaufbau in einem Zeitraum Δt_lastauf, wobei die Kupplung 3, soweit noch nicht erfolgt, vollständig geschlossen wird.

Für den Fall, dass der Umschaltvorgang der Bereichsgruppe GP vor dem Erreichen der Zieldrehzahl des Verbrennungsmotors 1 abgeschlossen ist, wird das Hauptgetriebe HG sofort nach dessen externer Synchronisierung verzögerungsfrei durchgeschaltet.

### Bezugszeichenliste

- 1: Verbrennungsmotor, Antriebsvorrichtung
- 2: Antriebswelle
- 3: Trennkupplung
- 4: Eingangswelle
- 5: Hauptwelle
- 6: Vorgelegewelle
- 7: Ausgangswelle, Abtriebswelle
- 8: Sonnenrad
- 9: Planentenrad
- 10: Planetenträger
- 11: Hohlrad
- 12: Ortsfestes Bauteil, Getriebegehäuse
- G5: Fünfter Gang
- G6: Sechster Gang
- GP: Bereichsgruppe
- GP1: Unterer Gangbereich
- GP2: Oberer Gangbereich
- HG: Hauptgetriebe
- HG1: Erster Hauptgetriebegang
- HG2: Zweiter Hauptgetriebegang
- HG3: Dritter Hauptgetriebegang
- HG4: Vierter Hauptgetriebegang
- HG5: Fünfter Hauptgetriebegang
- n: Drehzahl
- n_VM: Motordrehzahl
- n_Ziel: Zieldrehzahl
- RG: Rückwärtsgangstufe
- S1-S12: Schaltschritt
- SP1: Synchronisierungsvorrichtung, Synchronschaltpaket
- SP2: Synchronisierungsvorrichtung, Synchronschaltpaket
- SP3: Synchronisierungsvorrichtung, Synchronschaltpaket
- SP4: Synchronisierungsvorrichtung, Synchronschaltpaket
- t: Zeit
- t_sync: Synchronisationszeitpunkt
- Δt_GP: Umschaltzeitraum Bereichsgruppe
- Δt_HG: Umschaltzeitraum Hauptgetriebe
- Δt_lastab: Lastabbau-Zeitraum
- Δt_lastfrei: Lastfrei-Zeitraum
- Δt_lastauf: Lastaufbau-Zeitraum

## Patentansprüche

1. Verfahren zur Schaltsteuerung eines automatisierten Gruppengetriebes, wobei das Gruppengetriebe mindestens ein mehrstufiges Hauptgetriebe (HG) sowie eine dem Hauptgetriebe (HG) antriebstechnisch nachgeordnete und mit diesem über eine Hauptwelle (5) antriebsverbundene zumindest zweistufige Bereichsgruppe (GP) aufweist, bei dem eine Eingangswelle (4) des Hauptgetriebes (HG) mit einer Antriebsvorrichtung (1) antriebsverbindbar oder antriebsverbunden ist, bei dem das Hauptgetriebe (HG) und die Bereichsgruppe (GP) Synchronisierungsvorrichtungen (SP1, SP2, SP3, SP4) mit Schaltkupplungen aufweisen, wobei die Synchronisierungsvorrichtungen (SP1, SP2, SP3) für das Hauptgetriebe (HG) jeweils zwei Schaltstellungen für die betreffenden Übersetzungsstufen und eine Schaltstellung für eine Neutralstellung aufweisen, wobei die mindestens eine Synchronisierungsvorrichtung (SP4) der Bereichsgruppe (GP) ausschließlich zwei Schaltstellungen für die betreffenden Übersetzungsstufen aufweist, und bei dem während einer Bereichsschaltung in dem Hauptgetriebe (HG) sowie in der Bereichsgruppe (GP) jeweils ein Wechsel zwischen zwei Übersetzungsstufen erfolgt, **dadurch gekennzeichnet, dass** bei der Bereichsschaltung während des Synchronisierens der Bereichsgruppe (GP) die Eingangswelle (4) des zuvor in Neutral geschalteten Hauptgetriebes (HG) mittels einer Ansteuerung externer, auf die Eingangswelle (4) wirkenden Synchronisierungshilfen (1, 3) auf eine Zieldrehzahl (n_Ziel) synchronisiert wird, und dass nach dem Erreichen der Zieldrehzahl wahlweise entweder nach dem Synchronisieren und Umschalten der Übersetzungsstufe der Bereichsgruppe (GP) oder unabhängig vom momentanen Synchronisierungszustand der Bereichsgruppe (GP) die neue Übersetzungsstufe in dem Hauptgetriebe (HG) eingelegt wird.

2. Verfahren nach Anspruch 1, **dadurch gekennzeichnet, dass** die neue Übersetzungsstufe in dem Hauptgetriebe (HG) vor dem Abschluss des Synchronisationsvorgangs der Bereichsgruppe (GP) eingelegt wird.

3. Verfahren nach Anspruch 1 oder 2, **dadurch gekennzeichnet, dass** als eine externe Synchronisierungshilfe ein Verbrennungsmotor (1) und/oder eine zwischen dem Verbrennungsmotor (1) und der Eingangswelle (4) des Hauptgetriebes (HG) angeordnete steuerbare Trennkupplung (3) und/oder eine mit dem Hauptgetriebe (HG) antriebsverbundene Elektromaschine und/oder eine regelbare Getriebebremse und/oder eine regelbare Hydraulikmittelpumpe und/oder ein steuerbares Aggregat eines Nebenabtriebs vorgesehen ist.

4. Verfahren nach einem der Ansprüche 1 bis 3, **dadurch gekennzeichnet, dass** bei einem Fahrzeug mit einem Parallelhybridantrieb das Einstellen der Zieldrehzahl der Eingangswelle (4) wahlweise mittels einer als Antriebsvorrichtung zur Verfügung stehenden Elektromaschine erfolgt.

5. Verfahren nach einem der Ansprüche 1 bis 4, **dadurch gekennzeichnet, dass** bei der Ansteuerung einer externen Synchronisierungshilfe (1, 3) der Gradient des auf die Eingangswelle (4) einwirkenden Drehmomentes auf einen Grenzwert begrenzt wird, der unterhalb eines maximal zulässigen Belastungsmomentes und/oder unterhalb eines Sperrmomentes der internen Synchronisierungsvorrichtungen (SP1, SP2, SP3) des Hauptgetriebes (HG) liegt.

6. Verfahren nach einem der Ansprüche 1 bis 5, **dadurch gekennzeichnet, dass** bei dem Einlegen der Übersetzung des Hauptgetriebes (HG) und/oder bei dem Einlegen der Übersetzung der Bereichsgruppe (GP) eine zuvor geschlossene oder teilgeschlossene Trennkupplung (3) vorübergehend erneut geöffnet oder teilgeöffnet wird.

7. Verfahren nach einem der Ansprüche 1 bis 6, **dadurch gekennzeichnet, dass** folgende Verfahrensschritte durchgeführt werden, wobei die Synchronisierung der Eingangswelle (4) des Hauptgetriebes (HG) mittels einer Ansteuerung eines Verbrennungsmotors (1) und einer Trennkupplung (3) erfolgt und die Bereichsgruppe (GP) zweistufig ausgebildet ist:
- Öffnen der Trennkupplung (3) zum Verbrennungsmotor (1) und Lastabbau am Verbrennungsmotor (1) (Schritt S1, Schritt S2),
- Umschalten der Übersetzungsstufe der Bereichsgruppe (GP) und Beginn des Wechsels der Übersetzungsstufe des Hauptgetriebes (HG), sowie Drehzahlführung des Verbrennungsmotors (1) auf die Zieldrehzahl des Zielgangs der Bereichsschaltung an der Eingangswelle (4) des Hauptgetriebes (HG) (Schritt S3, Schritt S4, Schritt S5), mit
- Schalten des Hauptgetriebes (HG) nach Neutral (Schritt S3a),
- Warten des Hauptgetriebes (HG) auf das Erreichen der Zieldrehzahl durch den Verbrennungsmotor (1) (Schritt S3b),
- Schließen oder Teilschließen der Trennkupplung (3) (Schritt S10) nach Beendigung der Umschaltung der Bereichsgruppe (GP) (Schritt S6),
- Einlegen der neuen Übersetzungsstufe im Hauptgetriebe (HG) (Schritt S11),
- vollständiges Schließen der Trennkupplung (3) zum Verbrennungsmotor (1) und Lastaufbau am Verbrennungsmotor (1) (Schritt S12).

8. Verfahren nach einem der Ansprüche 1 bis 6, **dadurch gekennzeichnet, dass** folgende Verfahrensschritte durchgeführt werden, wobei die Synchronisierung der Eingangswelle (4) des Hauptgetriebes (HG) mittels einer Ansteuerung eines Verbrennungsmotors (1) und der Trennkupplung (3) erfolgt und die Bereichsgruppe (GP) zweistufig ausgebildet ist:
- Öffnen der Trennkupplung (3) zum Verbrennungsmotor (1) und Lastabbau am Verbrennungsmotor (1) (Schritt S1, Schritt S2),
- Wechsel der Übersetzungsstufe des Hauptgetriebes (HG) und Beginn des Umschaltens der Übersetzungsstufe der Bereichsgruppe (GP), sowie Beginn einer Drehzahlführung des Verbrennungsmotors (1) auf die Zieldrehzahl des Zielgangs der Bereichsschaltung an der Eingangswelle (4) des Hauptgetriebes (HG) (Schritt S1, Schritt S2, Schritt S3), mit
- Schalten des Hauptgetriebes (HG) nach Neutral (Schritt S3a),
- Warten des Hauptgetriebes (HG) auf das Erreichen der Zieldrehzahl durch den Verbrennungsmotor (1) (Schritt S3b),
- Schließen oder Teilschließen der Trennkupplung (3) (Schritt S3c),
- Einlegen der neuen Übersetzungsstufe im Hauptgetriebe (HG) (Schritt S3d),
- Unterstützen eines laufenden Synchronisierungsvorgangs der Bereichsgruppe (GP) durch die interne Synchronisierung (SP1, SP2, SP3) des Hauptgetriebes (HG) (Schritt S6),
- Einlegen der neuen Übersetzungsstufe der Bereichsgruppe (GP) (Schritt S7),
- vollständiges Schließen der Trennkupplung (3) zum Verbrennungsmotor (1) und Lastaufbau am Verbrennungsmotor (1) (Schritt S8).

## Claims

1. Method for the shift control of an automated group transmission, the group transmission having at least one multiple-stage main transmission (HG) and a range group (GP) which is arranged downstream of the main transmission (HG) in drive terms and is drive-connected to the said main transmission (HG) via a main shaft (5), in which method an input shaft (4) of the main transmission (HG) can be drive-connected or is drive-connected to a drive apparatus (1), in which method the main transmission (HG) and the range group (GP) have synchronizing apparatuses (SP1, SP2, SP3, SP4) with shifting clutches, the synchronizing apparatuses (SP1, SP2, SP3) having, for the main transmission (HG), in each case two shifting positions of the relevant transmission stages and one shifting position for a neutral position, the at least one synchronizing apparatus (SP4) of the range group (GP) having exclusively two shifting positions for the relevant transmission stages, and in which method in each case a change between two transmission ratios takes place during a range shift in the main transmission (HG) and in the range group (GP), **characterized in that**, in the case of the range shift during the synchronizing of the range group (GP), the input shaft (4) of the main transmission (HG) which was previously shifted into neutral is synchronized to a target rotational speed (n_Ziel) by means of an actuation of external synchronizing aids (1, 3) which act on the input shaft (4), and **in that**, after the target rotational speed is reached, the new transmission ratio is engaged in the main transmission (HG) optionally either after the synchronizing and shifting over of the transmission stage of the range group (GP) or independently of the instantaneous synchronizing state of the range group (GP) .

2. Method according to Claim 1, **characterized in that** the new transmission ratio is engaged in the main transmission (HG) before the synchronizing operation of the range group (GP) is concluded.

3. Method according to Claim 1 or 2, **characterized in that** an internal combustion engine (1) and/or a controllable separating clutch (3) which is arranged between the internal combustion engine (1) and the input shaft (4) of the main transmission (HG) and/or an electric machine which is drive-connected to the main transmission (HG) and/or a regulatable transmission brake and/or a regulatable hydraulic medium pump and/or a controllable assembly of a power take-off are/is provided as an external synchronizing aid.

4. Method according to one of Claims 1 to 3, **characterized in that**, in the case of a vehicle with a parallel hybrid drive, the target rotational speed of the input shaft (4) is set optionally by means of an electric machine which is available as a drive apparatus.

5. Method according to one of Claims 1 to 4, **characterized in that**, in the case of the actuation of an external synchronising aid (1, 3), the gradient of the torque which acts on the input shaft (4) is limited to a limit value which lies below a maximum permissible loading torque and/or below a locking torque of the internal synchronizing apparatuses (SP1, SP2, SP3) of the main transmission (HG).

6. Method according to one of Claims 1 to 5, **characterized in that**, in the case of the engagement of the transmission ratio of the main transmission (HG) and/or in the case of the engagement of the transmission ratio of the range group (GP), a separating clutch (3) which was previously closed or partially closed is opened or partially opened again temporarily.

7. Method according to one of Claims 1 to 6, **characterized in that** the following method steps are carried out, the synchronization of the input shaft (4) of the main transmission (HG) taking place by means of an actuation of an internal combustion engine (1) and a separating clutch (3), and the range group (GP) being configured in two stages:
- opening of the separating clutch (3) to the internal combustion engine (1) and load dissipation at the internal combustion engine (1) (step S1, step S2),
- switching over of the transmission stage of the range group (GP) and beginning of the change of the transmission stage of the main transmission (HG), and rotational speed management of the internal combustion engine (1) to the target rotational speed of the target gear of the range shift at the input shaft (4) of the main transmission (HG) (step S3, step S4, step S5), with
- shifting of the main transmission (HG) into neutral (step S3a),
- waiting of the main transmission (HG) for the target rotational speed to be reached by way of the internal combustion engine (1) (step S3b),
- closing or partial closing of the separating clutch (3) (step S10) after the end of the shifting over of the range group (GP) (step S6),
- engaging of the new transmission stage in the main transmission (HG) (step S11),
- complete closing of the separating clutch (3) to the internal combustion engine (1) and load build-up at the internal combustion engine (1) (step S12).

8. Method according to one of Claims 1 to 6, **characterized in that** the following method steps are carried out, the synchronization of the input shaft (4) of the main transmission (HG) taking place by means of an actuation of an internal combustion engine (1) and the separating clutch (3), and the range group (GP) being configured in two stages:
- opening of the separating clutch (3) to the internal combustion engine (1) and load dissipation at the internal combustion engine (1) (step S1, step S2),
- changing of the transmission stage of the main transmission (HG) and beginning of the shifting over of the transmission stage of the range group (GP), and beginning of rotational speed management of the internal combustion engine (1) to the target rotational speed of the target gear of the range shift at the input shaft (4) of the main transmission (HG) (step S1, step S2, step S3), with
- shifting of the main transmission (HG) into neutral (step S3a),
- waiting of the main transmission (HG) for the target rotational speed to be reached by way of the internal combustion engine (1) (step S3b),
- closing or partial closing of the separating clutch (3) (step S3c),
- engaging of the new transmission stage in the main transmission (HG) (step S3d),
- assisting of a running synchronizing operation of the range group (GP) by way of the internal synchronization (SP1, SP2, SP3) of the main transmission (HG) (step S6),
- engaging of the new transmission stage of the range group (GP) (step S7),
- complete closing of the separating clutch (3) to the internal combustion engine (1) and load build-up at the internal combustion engine (1) (step S8).

## Revendications

1. Procédé pour la commande de la commutation d'une boîte de vitesses groupée automatisée, dans lequel la boîte de vitesses groupée présente au moins une boîte de vitesses principale à plusieurs étages (HG) ainsi qu'un groupe de zone à au moins deux étages (GP) disposé cinématiquement après la boîte de vitesses principale (HG) et relié cinématiquement à celle-ci par un arbre principal (5), dans lequel un arbre d'entrée (4) de la boîte de vitesses principale (HG) peut être ou est relié cinématiquement à un dispositif d'entraînement (1), dans lequel la boîte de vitesses principale (HG) et le groupe de zone (GP) présentent des dispositifs de synchronisation (SP1, SP2, SP3, SP4) avec des embrayages de commutation, dans lequel les dispositifs de synchronisation (SP1, SP2, SP3) pour la boîte de vitesses principale (HG) présentent respectivement deux positions de commutation pour les étages de transmission concernés et une position de commutation pour une position neutre, dans lequel ledit au moins un dispositif de synchronisation (SP4) du groupe de zone (GP) présente exclusivement deux positions de commutation pour les étages de transmission concernés, et dans lequel pendant une commutation de zone il se produit dans la boîte de vitesses principale (HG) ainsi que dans le groupe de zone (GP) respectivement un changement entre deux étages de transmission, **caractérisé en ce que**, lors de la commutation de zone pendant la synchronisation du groupe de zone (GP), on synchronise l'arbre d'entrée (4) de la boîte de vitesses principale (HG) préalablement commuté en position neutre à un nombre de tours cible (n_cible) au moyen d'une commande d'organes de synchronisation externes (1, 3) agissant sur l'arbre d'entrée (4), et **en ce qu'**après avoir atteint le nombre de tours cible on engage le nouvel étage de transmission dans la boîte de vitesses principale (HG) au choix soit après la synchronisation et la commutation de l'étage de transmission du groupe de zone (GP) soit indépendamment de l'état de synchronisation instantané du groupe de zone (GP) .

2. Procédé selon la revendication 1, **caractérisé en ce que** l'on engage le nouvel étage de transmission dans la boîte de vitesses principale (HG) avant la fin de l'opération de synchronisation du groupe de zone (GP).

3. Procédé selon la revendication 1 ou 2, **caractérisé en ce qu'**il est prévu comme organe de synchronisation externe un moteur à combustion interne (1) et/ou un embrayage de séparation contrôlable (3) disposé entre le moteur à combustion interne (1) et l'arbre d'entrée (4) de la boîte de vitesses principale (HG) et/ou une machine électrique reliée cinématiquement à la boîte de vitesses principale (HG) et/ou un frein de boîte de vitesses réglable et/ou une pompe à fluide hydraulique réglable et/ou un ensemble contrôlable d'une sortie secondaire.

4. Procédé selon l'une quelconque des revendications 1 à 3, **caractérisé en ce que** dans un véhicule avec un entraînement hybride parallèle on effectue le réglage du nombre de tours cible de l'arbre d'entrée (4) au choix au moyen d'une machine électrique disponible comme dispositif d'entraînement.

5. Procédé selon l'une quelconque des revendications 1 à 4, **caractérisé en ce que**, lors de la commande d'un organe de synchronisation externe (1, 3), on limite le gradient du couple de rotation agissant sur l'arbre d'entrée (4) à une valeur limite, qui se situe en dessous d'un couple de charge admissible maximum et/ou en dessous d'un couple d'arrêt des organes de synchronisation internes (SP1, SP2, SP3) de la boîte de vitesses principale (HG).

6. Procédé selon l'une quelconque des revendications 1 à 5, **caractérisé en ce que**, lors de l'engagement de la transmission de la boîte de vitesses principale (HG) et/ou lors de l'engagement de la transmission du groupe de zone (GP), on ouvre ou on ouvre partiellement de nouveau provisoirement un embrayage de séparation (3) antérieurement fermé ou partiellement fermé.

7. Procédé selon l'une quelconque des revendications 1 à 6, **caractérisé en ce que** l'on exécute les étapes de procédé suivantes, dans lequel on effectue la synchronisation de l'arbre d'entrée (4) de la boîte de vitesses principale (HG) au moyen d'une commande d'un moteur à combustion interne (1) et d'un embrayage de séparation (3) et le groupe de zone (GP) est réalisé à deux étages:
- ouvrir l'embrayage de séparation (3) vers le moteur à combustion interne (1) et supprimer la charge sur le moteur à combustion interne (1) (étape S1, étape S2),
- commuter l'étage de transmission du groupe de zone (GP) et commencer le changement de l'étage de transmission de la boîte de vitesses principale (HG), et amener le nombre de tours du moteur à combustion interne (1) au nombre de tours cible du rapport visé de la commutation de zone à l'arbre d'entrée (4) de la boîte de vitesses principale (HG) (étape S3, étape S4, étape S5), avec
- commuter la boîte de vitesses principale (HG) en position neutre (étape S3a),
- attendre que la boîte de vitesses principale (HG) atteigne le nombre de tours cible par le moteur à combustion interne (1) (étape S3b),
- fermer ou fermer partiellement l'embrayage de séparation (3) (étape S10) après la fin de la commutation du groupe de zone (GP) (étape S6),
- engager le nouvel étage de transmission dans la boîte de vitesses principale (HG) (étape S11),
- fermer complètement l'embrayage de séparation (3) vers le moteur à combustion interne (1) et établir la charge au moteur à combustion interne (1) (étape S12).

8. Procédé selon l'une quelconque des revendications 1 à 6, **caractérisé en ce que** l'on exécute les étapes de procédé suivantes, dans lequel on effectue la synchronisation de l'arbre d'entrée (4) de la boîte de vitesses principale (HG) au moyen d'une commande d'un moteur à combustion interne (1) et d'un embrayage de séparation (3) et le groupe de zone (GP) est réalisé à deux étages:
- ouvrir l'embrayage de séparation (3) vers le moteur à combustion interne (1) et supprimer la charge sur le moteur à combustion interne (1) (étape S1, étape S2),
- changer l'étage de transmission de la boîte de vitesses principale (HG) et commencer la commutation de l'étage de transmission du groupe de zone (GP), ainsi que commencer à amener un nombre de tours du moteur à combustion interne (1) au nombre de tours cible du rapport visé de la commutation de zone à l'arbre d'entrée (4) de la boîte de vitesses principale (HG) (étape S1, étape S2, étape S3), avec
- commuter la boîte de vitesses principale (HG) en position neutre (étape S3a),
- attendre que la boîte de vitesses principale (HG) atteigne le nombre de tours cible par le moteur à combustion interne (1) (étape S3b),
- fermer ou fermer partiellement l'embrayage de séparation (3) (étape S3c),
- engager le nouvel étage de transmission dans la boîte de vitesses principale (HG) (étape S3d),
- soutenir l'opération de synchronisation en cours du groupe de zone (GP) par la synchronisation interne (SP1, SP2, SP3) de la boîte de vitesses principale (HG) (étape S6),
- engager le nouvel étage de transmission du groupe de zone (GP) (étape S7),
- fermer complètement l'embrayage de séparation (3) vers le moteur à combustion interne (1) et établir la charge au moteur à combustion interne (1) (étape S8).
